# FASCICULE DE BREVET EUROPEEN

(11) **EP 0 406 799 B1**
(45) Date de publication et mention de la délivrance du brevet: **21.09.1994**
(21) Numéro de dépôt: 90112677.1
(22) Date de dépôt: 03.07.1990
(51) Int. Cl.: H04M 11/08

(54) **Terminal de vidéographie multi-fonctions**
Multifunktions-Videotextendgerät
Multi-function videotex terminal

(30) Priorité: 06.07.1989 FR 8909122
(43) Date de publication de la demande: 09.01.1991
(73) Titulaire: ALCATEL BUSINESS SYSTEMS, F-75008 Paris (FR)
(72) Inventeur: Guyot, Gilbert, F-67190 Mutzing (FR)
(74) Mandataire: Weinmiller, Jürgen

(56) Documents cités:
- DE-A- 3 503 075
- FR-A- 2 555 843
- FR-A- 2 594 279

## Description

La présente invention porte sur les terminaux de vidéographie et en particulier sur des perfectionnements apportés à ces terminaux rendus alors multi-fonctions.

Les terminaux de vidéographie tels que ceux connus sous la dénomination Minitel sont raccordés au réseau téléphonique commuté pour une transmission de signaux de données à travers le réseau avec un équipement distant également raccordé au réseau. Cet équipement distant peut être un terminal de vidéographie ou un serveur.

L'établissement d'une liaison téléphonique est assuré, préalablement à la transmission de signaux de données, à l'aide de moyens associés ou intégrés dans le terminal, selon une procédure d'accès au réseau.

De manière connue, le terminal de vidéographie comporte un modem et un duplexeur, pour la transmission bidirectionnelle de signaux sur la ligne téléphonique à laquelle il est raccordé, et une unité de traitement des signaux de données pour l'émission et la réception des signaux de données par le terminal.

L'unité de traitement est organisée essentiellement autour d'un microprocesseur. Elle a des mémoires associées au microprocesseur et est couplée à un clavier de rentrée de données à émettre et à un écran d'affichage de données reçues. Dans le terminal de vidéographie, une alimentation fournit des niveaux convenables de tension aux différents circuits.

Le modem relie l'unité de traitement à une entrée unidirectionnelle et une sortie unidirectionnelle de signaux de données du duplexeur. Ce modem est affecté à la transformation de signaux de données numériques dans l'unité de traitement en signaux de données analogiques transmis sur la ligne téléphonique. Le duplexeur sépare les signaux de données d'émission des signaux de données de réception, qui sont transmis dans un sens et l'autre, respectivement, sur la ligne. Il a une entrée / sortie bidirectionnelle de signaux qui est couplée à la ligne à travers des moyens d'isolation galvanique. Il comporte deux amplificateurs opérationnels entre son entrée / sortie bidirectionnelle de signaux et son entrée unidirectionnelle et sa sortie unidirectionnelle de signaux.

Un générateur de courant continu, en parallèle sur la ligne téléphonique, assure le maintien d'un courant continu sur la ligne, pour la détection de l'état occupé de la ligne vu par le central, dès que la liaison téléphonique a été établie et pendant la durée de cette liaison.

La transmission bidirectionnelle des signaux de données sur la ligne téléphonique est assurée en affectant au niveau du modem deux bandes de fréquence à l'un et l'autre des deux sens de transmission des signaux et des vitesses de transmission différentes pour ces deux sens de transmission. Les deux bandes de fréquence sont centrées sur la fréquence de 420 Hz pour les signaux de données émis par le terminal et sur la fréquence de 1700 Hz pour ceux reçus par le terminal. La transmission est faite de manière courante à une vitesse de 75 bauds pour les signaux émis par le terminal et à une vitesse de 1200 bauds pour ceux reçus par le terminal.

Le terminal de vidéographie comporte en outre un module d'interface à prise péri-informatique de raccordement à un équipement périphérique extérieur, pour une transmission possible de signaux de données entre l'équipement périphérique et l'écran et le clavier du terminal ou une transmission possible de signaux de données entre l'équipement périphérique et la ligne téléphonique faite alors à travers le modem et le duplexeur du terminal. Cette prise péri-informatique est une prise DIN à 5 broches, dites broches 1 à 5 de réception de signaux de données par le terminal, de masse numérique, d'émission de signaux de données par le terminal, de périphérique en transmission et de sortie alimentation pour le périphérique. Ces 5 broches sont couplées, à travers un circuit d'interface de protection, au microprocesseur de l'unité de traitement pour les quatre premières d'entre elles et à l'alimentation interne du terminal pour la cinquième.

Cette prise péri-informatique, sur laquelle est raccordé le périphérique à connecteur complémentaire, permet un échange de données numériques entre le périphérique et le terminal. Le phériphérique peut ainsi utiliser l'écran et le clavier du terminal, il peut également utiliser la ligne téléphonique raccordée au terminal pour une transmission de données numériques à travers le modem du terminal. Cette transmission de données entre le périphérique et la ligne téléphonique reste cependant limitée aux signaux de données numériques émis ou reçus par le périphérique et transmis en signaux de données analogiques aux vitesses de transmission définies par le modem du terminal.

La présente invention a pour but d'étendre les fonctions du terminal de vidéographie auquel est raccordé un équipement périphérique, à l'aide d'adaptations qui sont apportées au terminal, mais qui ne touchent en rien à ses circuits de base et n'entraînent qu'un surcoût négligeable.

La présente invention a pour objet un terminal de vidéographie multi-fonctions relié à une ligne téléphonique du réseau commuté et sur lequel peut être raccordé un périphérique extérieur, comportant un duplexeur de séparation de signaux transmis sur ladite ligne, des moyens d'isolation galvanique couplant ladite ligne et une entrée / sortie bidirectionnelle de signaux dudit duplexeur, un modem relié à une entrée unidirectionnelle et à une sortie unidirectionnelle de signaux dudit duplexeur, une unité de traitement à microprocesseur reliée audit modem et couplée à un écran et à un clavier, et un module d'interface à prise de raccordement dudit périphérique, dans lequel ladite prise est à broches individuelles de réception de signaux de données numériques par le terminal, pour une première des broches, de masse pour une deuxième des broches, d'émission de signaux de données numériques par le terminal pour une troisième des broches, de périphérique en transmission pour une quatrième des broches et de sortie alimentation pour le périphérique pour une cinquième des broches, ledit terminal étant caractérisé en ce que il comporte, en outre, trois broches supplémentaires sur ladite prise dudit module d'interface, dites respectivement sixième broche pour l'une d'elles affectée à la réception d'un signal audio-fréquence de ladite ligne et couplée à la sortie unidirectionnelle de signaux dudit duplexeur, septième broche pour une autre d'entre elles affectée à l'émission d'un signal audio-fréquence vers ladite ligne et couplée à l'entrée unidirectionnelle de signaux dudit duplexeur, et huitième broche pour la dernière d'entre elles affectée à une masse analogique et couplée à la masse analogique interne du terminal.

En particulier, le périphérique est un répondeur à signal de synthèse vocale, ou un répondeur-enregistreur vocal, ou encore un modem à vitesse de transmission supérieure à celle du modem du terminal.

Avantageusement le périphérique est en outre équipé d'une prise péri-informatique à 5 broches ou d'une prise à 8 broches analogue à celle du terminal, pour le couplage en chaîne de plusieurs périphériques sur le terminal.

Les caractéristiques et les avantages de la présente invention ressortiront de la description donnée ci-après en regard des dessins annexés. Dans ces dessins :
- la figure 1 représente un terminal de vidéographie adapté selon la présente invention,
- la figure 2 montre la prise du terminal de la figure 1, pour le raccordement d'un périphérique,
- la figure 3 illustre le terminal précité équipé en répondeur vocal,
- la figure 4 illustre le terminal précité équipé en répondeur-enregistreur vocal,
- la figure 5 illustre le terminal précité équipé en terminal haute vitesse de transmission.

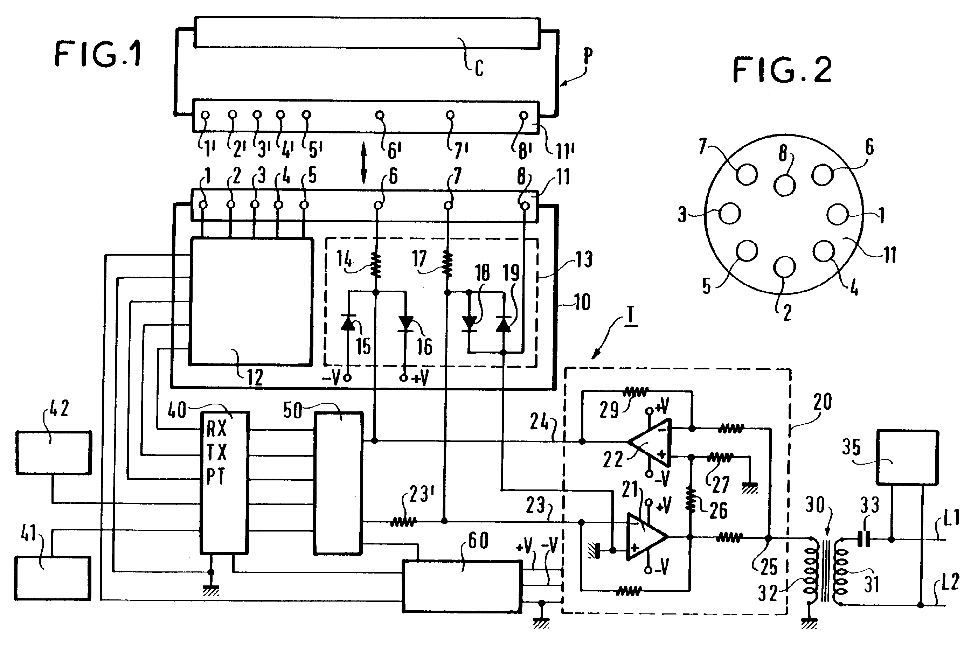

Dans la figure 1, on a illustré un terminal de vidéographie multi-fonctions selon l'invention. Ce terminal est conforme pour l'essentiel de ses équipements internes au terminal connu sous la dénomination Minitel, il est désigné globalement par la lettre T. Il peut recevoir un périphérique extérieur P qui vient se raccorder sur le terminal T.

Le terminal T est relié à une ligne téléphonique L₁L₂ du réseau commuté. Le périphérique P est raccordable sur un circuit d'interface 10 du terminal ainsi que schématisé par la flèche double entre eux. Ce circuit d'interface 10 est à prise péri-informatique et audio-fréquence 11. Il est décrit plus en détail ci-après.

Le terminal T comporte un duplexeur 20 couplé à la ligne téléphonique à travers des moyens d'isolation galvanique 30 et à une unité de traitement 40 à travers un modem 50. Des moyens associés au terminal ou intégrés dans le terminal permettent l'établissement d'une liaison téléphonique avec un équipement distant à travers le réseau commuté. Ces moyens hors du cadre de la présente invention ne sont ni illustrés ni décrits.

Les moyens d'isolation galvanique 30 comportent un transformateur adapté à la transmission bidirectionnelle de signaux sur la ligne. Ce transformateur a un premier enroulement 31 couplé à travers un condensateur 33 la ligne L₁L₂. Un générateur de courant 35 est monté en parallèle sur la ligne. Il permet au central téléphonique de détecter l'état occupé de la ligne, une fois la liaison téléphonique établie. Le deuxième enroulement 32 du transformateur a l'une de ses bornes reliées au duplexeur et l'autre à la masse.

Le duplexeur 20 est décrit succinctement ci-après. Il comporte deux amplificateurs opérationnels l'un d'émission 21 et l'autre de réception 22, qui couplent le modem 50 à la ligne L₁ L₂, à travers le transformateur d'isolation 30. Il présente à cet effet, côté modem, une entrée unidirectionnelle de signaux 23 et une sortie unidirectionnelle de signaux 24, toutes deux reliées au modem et, côté ligne, une entrée / sortie bidirectionnelle de signaux reliée à l'enroulement 32 du transformateur 30. L'entrée 23 est reliée à la borne négative de l'amplificateur d'émission et au modem à travers une résistance d'entrée 23′; la borne positive de cet amplificateur est à la masse. La sortie 24 est reliée à la sortie de l'amplificateur de réception 22. L'entrée / sortie bidirectionnelle 25 est couplée en commun à l'entrée négative de l'amplificateur de réception 22 et à la sortie de l'amplificateur d'émission 21, à travers des résistances individuelles non référencées. L'entrée positive de l'amplificateur de réception 22 est couplée à travers une résistance 26 à sortie de l'amplificateur d'émission et à travers une résistance 27 à la masse, pour la différenciation entre signaux d'émission et signaux de réception. Ces amplifications ont par ailleurs une résistance de contre réaction 28 ou 29, selon le cas. Les niveaux de leurs tensions d'alimentation sont notés +V et -V, ils sont typiquement de + 8 et - 12 volts.

Une source d'alimentation interne 60 fournit ces deux niveaux d'alimentation des amplificateurs 21 et 22 et les autres niveaux convenables pour les autres circuits du terminal.

L'unité de traitement 40 et le modem 50 sont également en tant que tels connus. L'unité de traitement est organisée autour d'un microprocesseur à mémoires associées ; le microprocesseur est couplé à un clavier 41 et un écran 42 et au module d'interface 10 de raccordement au périphérique P, pour la rentrée par le clavier de données à émettre par le terminal vers la ligne ou le périphérique ou pour l'affichage sur l'écran de données reçues par le terminal de la ligne ou du périphérique. Le modem 50 assure la transformation des signaux de données numériques de l'unité de traitement 40 en signaux de données analogiques de la ligne, pour l'un et l'autre des deux sens de transmission sur la ligne. Il définit les deux bandes de fréquence d'émission et de réception des signaux, centrées sur la fréquence de 420 Hz pour les signaux émis par le terminal et sur la fréquence de 1700 Hz pour ceux reçus par le terminal. Il définit les vitesses de transmission, de 75 bauds à l'émission et 1200 bauds à la réception.
Le module d'interface est à prise péri-informatique et audio-fréquence 11 de type DIN à huit broches référencées de 1 à 8. Les broches 1 à 5 sont conformes à celles d'une prise péri-informatique DIN 5 broches, sur chacune desquelles sont disponibles les signaux suivants :
- broche 1 : réception des données par le terminal, ou signal Rx
- broche 2 : masse numérique
- broche 3 : émission de données par le terminal, ou signal Tx
- broche 4 : périphérique en transmission, ou signal PT
- broche 5 : sortie alimentation pour le périphérique.

Les broches 1,3 et 4, sont reliées à des accès individuels notés Rx, Tx, PT du microprocesseur de l'unité de traitement 40, la broche 2 à la masse du microprocesseur et la broche 5 à la source d'alimentation interne 60, à travers un circuit d'interface 12 de protection du microprocesseur. Ce circuit d'interface est conçu pour permettre de supporter des tensions continues pouvant aller jusqu'à + 18 volts ou - 18 volts, sur les broches 1 à 5.

Dans la prise DIN 8 broches du terminal selon l'invention, les trois broches supplémentaires 6,7 et 8 sont affectées aux signaux suivants :
- broche 6 : émission d'un signal audio-fréquence par le terminal T,
- broche 7 : réception d'un signal audio-fréquence par le terminal T,
- broches 8 : masse analogique.

Les broches 6,7 et 8 sont couplées individuellement à la sortie unidirectionnelle 24, à l'entrée unidirectionnelle 23 et à la masse du duplexeur 20, à travers un circuit auxiliaire d'interface 13 de protection.

Ce circuit auxiliaire d'interface 13 comporte, pour la broche 6, une résistance 14, entre la broche 6 et la sortie 24, et deux diodes 15 et 16 en sens inverse. Ces diodes sont reliés d'une part, toutes les deux à la connexion entre la résistance 14 et la sortie 24 et d'autre part pour l'une d'elle à la tension d'alimentation -V et pour l'autre à la tension d'alimentation + V des amplificateurs. Ces diodes fixent les niveaux extrêmes du signal qui peut être appliqué en provenance de la broche 6 sur la sortie 24, à + 12,6 volts et - 8,6 volts, pour une tension de seuil de 0,6 voit des diodes.

Ce circuit auxiliaire d'interface comporte une résistance 17 reliant la broche 7 à l'entrée 23 du duplexeur 20 en définissant un point de sommation de courant avec la résistance 23′. Il comporte aussi deux diodes 18 et 19 montées tête bêche et reliées à la connexion entre cette résistance 17 et l'entrée 23 et à la masse du duplexeur. Ces deux diodes imposent des niveaux de signaux, appliqués sur l'entrée 23 depuis les broches, qui sont compris entre + 0,6 et - 0,6 volt, pour une tension de seuil des diodes de 0,6 volt.

La broche 8 est directement raccordée, avec les diodes 18 et 19, à la masse analogique du duplexeur 20. Elle fournit pour le périphérique une masse analogique exempte du bruit que peut comporter la masse numérique sur la broche 2.

Dans la figure 1, le périphérique P est équipé d'une prise 11′ complémentaire de la prise DIN 8 broches 11 du terminal T. Les 8 broches complémentaires de la prise 11′ sont notées 1′ à 8′. En pratique le terminal T est à prise 11 femelle et le périphérique à prise 11′ mâle. Bien entendu, la prise DIN 8 broches 11 du terminal T est compatible ascendante avec une prise DIN 5 broches. Elle permet au terminal T d'accepter un périphérique à prise ne comportant que les 5 broches 1′ à 5′ complémentaires des broches 1 à 5 de la prise 11, ou un périphérique à prise ne comportant que les 3 broches 1′ 2′ 3′ complémentaires des seules broches 1,2 et 3 de la prise 11. Ce périphérique P est en outre équipé sur sa face arrière d'une autre prise DIN 5 ou 8 broches, désignée par la lettre C. Cette deuxième prise permet la liaison en chaîne de plusieurs périphériques.

Les broches 6 à 8 de la prise DIN 8 broches 11 donnent accès fonctionnellement à la ligne téléphonique L₁,L₂ pour le ou les périphériques chaînés raccordés au terminal T. Elles permettent des échanges de signaux audio-fréquence entre la ligne et le périphérique à travers les équipements du terminal T. Le périphérique P constitue ainsi un module d'extension au terminal T auquel il donne de nouvelles fonctions possibles.

Dans la figure 2, on a illustré la prise DIN 8 broches 11 précitée. On y a simplement repéré ses 8 broches 1 à 8 précitées, selon la configuration normalisée des broches de la prise.

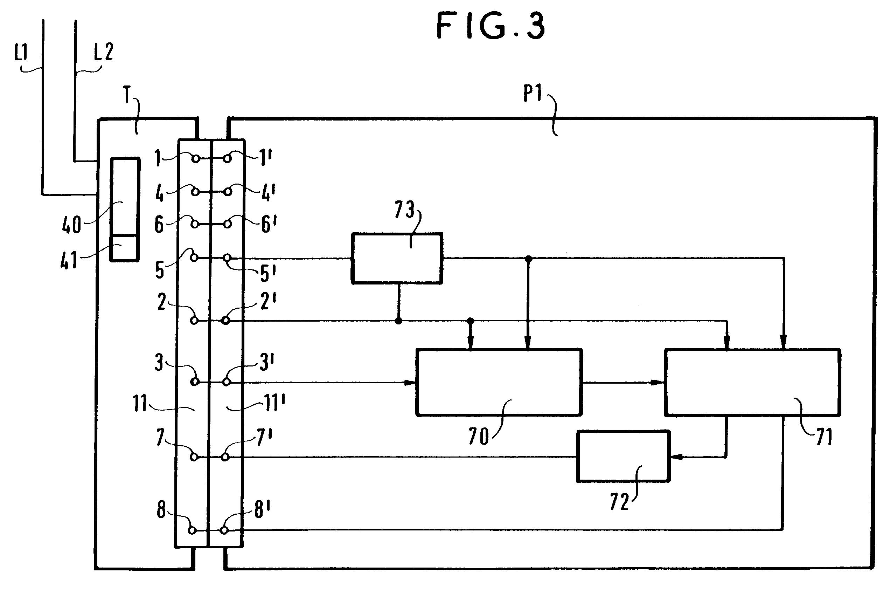

La figure 3 illustre un premier type de périphérique P1 raccordé au terminal T de la figure 1. Ce périphérique P1 est un module d'émission de synthèse vocale, il donne au terminal T la fonction de répondeur.

Le périphérique est raccordé par sa prise 8 broches 11′ à la prise 8 broches 11 du terminal T. Il comporte un circuit de synthèse vocale masqué 70 et un microcontrôleur masqué 71 de commande du circuit 70. Le microcontrôleur 71 est relié à la broche 3′ (signal Tx du terminal) et déclenche le circuit de synthèse vocale 70 dont la sortie est reliée à travers un circuit de filtrage 72 à la broche 7′. Le circuit 70 et le microcontroleur 71 sont alimentés à partir du terminal T, par la broche 5′, à travers un régulateur de tension 73, de niveau 5 volts. Ils reçoivent, avec le régulateur de tension, la masse numérique par la broche 2′ à laquelle ils sont reliés; le circuit de synthèse vocale 70 est en outre relié à la broche 8 pour recevoir la masse analogique du terminal T.
Les broches 1′, 4′, et 6′ de la prise 11′ ne sont pas utilisées. Le circuit de synthèse vocale 70 est par exemple celui connu sous les références µPD 7755 de la société NEC. Le microcontrôleur 71 est par exemple un détecteur d'une séquence particulière, émise par le microprocesseur de l'unité de traitement du terminal T, qu'il reçoit par la broche 3′.

Dans le terminal T, le microprocesseur de traitement 40 comporte des moyens schématisés en 41 d'émission de ladite séquence particulière qu'il envoie au périphérique pour déclencher la réponse de synthèse vocale transmise en retour au terminal. Cette réponse de synthèse vocale constitue un message qui peut être le suivant : "Vous êtes sur un répondeur télématique, veuillez connecter votre terminal". Le terminal T transmet à travers son modem ce message en ligne pour l'appelant distant. Cette réponse de synthèse vocale intervient après le signal de retour d'appel vers l'appelant, en fin de procédure d'établissement de la liaison téléphonique entre l'appelant distant et l'abonné équipé du terminal T auquel est raccordé le module périphérique P1 d'émission de synthèse vocale, selon la figure 3.

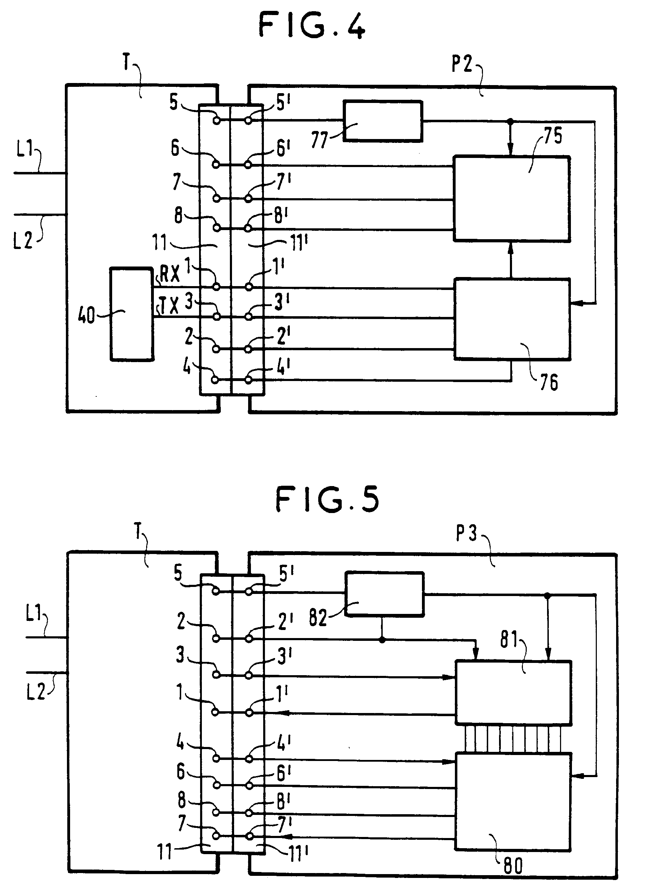

La figure 4 illustre un autre type de périphérique P2 raccordé au terminal T de la figure 1. Ce périphérique P2 est un module répondeur-enregistreur vocal et donne cette fonction de répondeur-enregistreur vocal au terminal auquel il est raccordé.

Ce périphérique P2 comporte un répondeur-enregistreur vocal 75, un microcontrôleur de commande 76 et une alimentation régulée 77 pour l'alimentation du répondeur-enregistreur et du microcontrôleur à partir du terminal T. Le microcontrôleur 76 est relié aux broches 1′ et 3′, pour les signaux Rx et Tx du microprocesseur du terminal T et aux broches 2′ et 4′. Le répondeur-enregistreur 75 est par exemple à bande magnétique ; il est relié aux broches 6′ et 7′ de la prise 11′, pour la transmission de signaux audio- fréquence à travers le terminal T; il reçoit la masse analogique par la broche 8′.

Le microcontrôleur 76 comporte une fonction de détection de signal d'appel, en provenance du microprocesseur du terminal par la broche 3′, et émet en retour une séquence spécifique de prise de ligne par la broche 1′, pour l'établissement de la liaison téléphonique. Il assure également la commande du répondeur-enregistreur vocal 75, une fois la liaison établie, pour l'émission de l'invitation à laisser un message par la proche 7′ et l'enregistrement du message vocal reçu par la broche 6′.

La figure 5 illustre un troisième type de périphérique P3 raccordé au terminal T de la figure 1. Ce périphérique P3 est un modem haute vitesse de transmission, par exemple à 4 800 bauds au lieu de 1200 bauds pour le modem interne du terminal T de la figure 1.

Le périphérique P3 comporte le modem haute vitesse proprement dit 80, un microcontrôleur 81 de commande du modem et une alimentation régulée symétrique 82. Il est équipé de sa prise 8 broches 11′. Le modem 80 est en tant que tel connu, il répond par exemple à la norme V27 TER du CCITT; le microcontrôleur 81 est configuré de manière connue pour la vitesse élevée de transmission souhaitée, 4800 bauds ; un ensemble de mémoires de travail lui est associé.

Le microcontrôleur 81 est relié aux broches 1′ et 3′ de sa prise 11′ (signaux Rx et Tx du terminal). Le modem 80 a son entrée et sa sortie reliées respectivment aux broches 6′ et 7′ de la prise 11′. L'alimentation régulée 82 est reliée à la broche 5′ et reçoit son alimentation du terminal T. Le microcontrôleur reçoit la masse numérique du terminal par la broche 2′, le modem 80 reçoit la masse analogique par la broche 8′.

Ce modem 80 se substitue fonctionnellement au modem interne du terminal T sous le contrôle de son microcontrôleur de commande 81 pour la transmission à vitesse élevée des signaux de données analogiques sur la ligne téléphonique.

Le microcontrôleur 81 assure la détection des caractéristiques de transmission des signaux de données pour l'équipement distant ou serveur, au cours de la procédure d'établissement de la liaison téléphonique, à partir du signal Tx émis par le microprocesseur du terminal. Il contrôle la prise et la libération de la ligne et commande l'inhibition du modem interne du terminal par le signal Rx pour le microprocesseur du terminal.

Ces signaux Rx et Tx du microprocesseur sont également utilisés pour véhiculer le flux de données numériques entre le périphérique P3 et le clavier et l'écran du terminal T, à travers le microprocesseur du terminal.

La présente invention a été décrite en regard d'exemples illustrés. On comprend aisément à partir de ces exemples que les broches supplémentaires 6 à 8 de la prise 11 du terminal donnent accès fonctionnellement à la ligne pour le périphérique P raccordé à cette prise 11. Elles permettent l'obtention de fonctions additionnelles sans modification notable des équipements de base du terminal T , à l'aide de modules d'extension, ou périphériques, raccordés à souhait par l'utilisateur à son terminal. En outre le connecteur C arrière, prévu sur le périphérique P comme montré dans la figure 1, qui rend possible le chaînage de plusieurs périphériques, constitue une prise péri-informatique pour la transmission des signaux de données numériques entre le terminal T et un autre périphérique, tel qu'une imprimante, raccordé sur ce connecteur C.

## Revendications

1. Terminal de vidéographie multi-fonctions relié à une ligne téléphonique du réseau commuté et sur lequel peut être raccordé un périphérique extérieur (P), comportant un duplexeur (20) de séparation de signaux transmis sur ladite ligne, des moyens d'isolation galvanique (30) couplant ladite ligne et une entrée / sortie bidirectionnelle de signaux dudit duplexeur, un modem (50) relié à une entrée unidirectionnelle et à une sortie unidirectionnelle de signaux dudit duplexeur, une unité de traitement à microprocesseur (40) reliée audit modem et couplée à un écran (42) et à un clavier (41), et un module d'interface (10) à prise de raccordement dudit périphérique, dans lequel ladite prise (11) est à broches individuelles de réception de signaux de données numériques par le terminal pour une première des broches, de masse pour une deuxième des broches, d'émission de signaux de données numériques par le terminal pour une troisième des broches, de périphérique en transmission pour une quatrième des broches et de sortie alimentation pour le périphérique pour une cinquième des broches, ledit terminal étant caractérisé en ce que il comporte en outre trois broches supplémentaires sur ladite prise (11) dudit module d'interface (10), dites respectivement sixième broche (6) pour l'une d'elles affectée à la réception d'un signal audio-fréquence de ladite ligne et couplée à la sortie unidirectionnelle (24) de signaux dudit duplexeur (20), septième broche pour une autre d'entre elles affectée à l'émission d'un signal audio-fréquence vers ladite ligne et couplée à l'entrée unidirectionnelle de signaux (23) dudit duplexeur (20), et huitième broche (8) pour la dernière d'entre elles affectée à une masse analogique et couplée à la masse analogique interne du terminal (T).

2. Terminal de vidéographie selon la revendication 1, caractérisé en ce qu'il comporte, en outre, un circuit d'interface de protection (13) entre lesdites sixième et septième broches (6,7) de ladite prise (11) et les dites sortie et entrée unidirectionnelles dudit duplexeur (20), imposant des niveaux extrêmes possibles, définis à partir des niveaux de tension d'alimentation du duplexeur, sur ladite sortie unidirectionnelle de signaux (24) du duplexeur, et des niveaux extrêmes possibles, définis à partir de ladite masse analogique, sur ladite entrée unidirectionnelle (23) du duplexeur (20).

3. Terminal de vidéographie selon la revendication 2, caractérisé sen ce que ledit périphérique est un module (P1) d'émission de synthèse vocale, comportant un circuit de synthèse vocale masqué (70) et un microcontrôleur masqué de commande (71) et équipé d'une prise (11′) complémentaire de ladite prise (11) du terminal, pour avec son alimentation à partir du terminal (T).

4. Terminal de vidéographie selon la revendication 2, caractérisé en ce que ledit périphérique est un module répondeur-enregistreur vocal (P2), comportant un répondeur-enregistreur vocal (75) et un microcontrôleur de commande (76) et équipé d'une prise (11′) complémentaire de la prise (11) du terminal pour son raccordement au terminal et son alimentation à partir du terminal.

5. Terminal de vidéographie selon la revendication 2, caractérisé en ce que ledit périphérique est un module modem (P3) à vitesse de transmission supérieure à celle du modem (30) du terminal (T), comportant un modem, proprement dit, à haute vitesse de transmission (80) et un microcontrôleur de commande (81) et équipé d'une prise (11′) complémentaire de la prise (11) dudit terminal, pour son raccordement au terminal et son alimentation à partir du terminal (T), le modem haute vitesse de transmission (80) se substituant fonctionnellement au modem interne (30) du terminal (T) sous le contrôle dudit microcontroleur de commande (81) pour permettre la haute vitesse de transmission de signaux de données analogiques sur ladite ligne téléphonique.

6. Terminal de vidéographie selon l'une des revendications 3,4 et 5, caractérisé en ce que ledit périphérique (P1,P2,P3) est, en outre, équipé d'un connecteur (C) sur l'une de ses faces autre que celle portant la prise (11′) complémentaire de celle (11) du terminal( T), pour le chaînage de plusieurs périphériques.

## Patentansprüche

1. Mehrfunktions-Videotext-Endgerät, das an eine Telefonleitung des Telefonnetzes angeschlossen ist und an das ein äußeres Peripheriegerät (P) angeschlossen werden kann, wobei das Peripheriegerät einen Duplexer (20) zur Trennung zwischen den auf der Leitung übertragenen Signalen, galvanische Isolationsmittel (30) zur Kopplung zwischen der Leitung und einem in beiden Richtungen wirksamen Signaleingang/-ausgang des Duplexers, ein an einen in einer Richtung wirksamen Eingang und an einen in einer Richtung wirksamen Ausgang des Duplexers angeschlossenes Modem (50), eine Verarbeitungseinheit mit einem Mikroprozessor (40), die an das Modem angeschlossen und mit einem Bildschirm (42) und mit einer Tastatur (41) gekoppelt ist, und einen Schnittstellenmodul (10) mit einem Steckanschluß an das Peripheriegerät aufweist, wobei dieser Steckanschluß (11) individuelle Anschlußstifte zum Empfang von digitalen Datensignalen vom Endgerät über einen ersten dieser Stifte, zum Empfang des Massepotentials über einen zweiten dieser Stifte, zur Aussendung von digitalen Datensignalen durch das Endgerät über einen dritten dieser Stifte, zur Übertragung von Peripheriesignalen über einen vierten dieser Stifte und zur Ausgabe der Speisespannung an das Peripheriegerät über einen fünften dieser Stifte besitzt, dadurch gekennzeichnet, daß das Endgerät weiter drei zusätzliche Stifte auf dem Steckanschluß (11) des Schnittstellenmoduls (10) besitzt, nämlich einen sechsten Stift (6), der ein Tonfrequenzsignal von der Leitung empfangen kann und an den in einer Richtung wirksamen Signalausgang (24) des Duplexers (20) gekoppelt ist, einen siebten Stift, der ein Tonfrequenzsignal auf die Leitung aussenden kann und an den in eine Richtung wirksamen Signaleingang (23) des Duplexers (20) angeschlossen ist, und einen achten Stift (8), der mit der analogen Masse verbunden ist und an die interne analoge Masse des Endgeräts (T) gekoppelt ist.

2. Videotext-Endgerät nach Anspruch 1, dadurch gekennzeichnet, daß es weiter eine Schnittstellenschutzschaltung (13) zwischen dem sechsten und siebten Stift (6, 7) des Anschlusses (11) und den in eine Richtung wirkenden Aus- und Eingängen des Duplexers (20) aufweist, die Höchstwerte der Pegel ausgehend von Pegeln der Speisespannung des Duplexers auf dem in einer Richtung wirksamen Signalausgang (24) des Duplexers sowie Höchstwerte der Pegel auf dem in einer Richtung wirksamen Eingang (23) des Duplexers (20) bezogen auf die analoge Masse definiert.

3. Videotext-Endgerät nach Anspruch 2, dadurch gekennzeichnet, daß das Peripheriegerät ein Modul (P1) zur synthetischen Sprachaussendung ist, der eine maskierte Sprachsyntheseschaltung (70) und einen maskierten Steuer-Mikrokontroller (71) besitzt und einen zum Steckanschluß (11) des Endgeräts komplementären Steckanschluß (11′) zu dessen Speisung aus dem Endgerät (T) aufweist.

4. Videotext-Endgerät nach Anspruch 2, dadurch gekennzeichnet, daß das Peripheriegerät ein Antwort-Sprachaufzeichnungsmodul (P2) mit einem Anrufbeantworter (75) und einem Steuer-Mikrokontroller (76) ist und einen zum Steckanschluß (11) des Endgeräts komplementären Steckanschluß (11′) für dessen Anschluß an das Endgerät und die Speisung aus dem Endgerät aufweist.

5. Videotext-Endgerät nach Anspruch 2, dadurch gekennzeichnet, daß das Peripheriegerät ein Modem-Modul (P3) mit größerer Übertragungsgeschwindigkeit als der des Modems (30) des Endgeräts (T) ist und ein eigentliches Modem (80) zur Übertragung mit hoher Geschwindigkeit und einen Steuer-Mikrokontroller (81) sowie einen zum Steckanschluß (11) des Endgeräts komplementären Steckanschluß (11′) für dessen Anschluß an das Endgerät und dessen Speisung aus dem Endgerät (T) besitzt, wobei das Modem (80) mit hoher Übertragungsgeschwindigkeit funktionell die Stelle des inneren Modems (30) des Endgeräts (T) unter Steuerung durch den Steuer-Mikrokontroller (81) einnimmt, um die hohe Übertragungsgeschwindigkeit für analoge Datensignale auf der Telefonleitung zu erlauben.

6. Videotext-Endgerät nach einem der Ansprüche 3, 4 und 5, dadurch gekennzeichnet, daß das Peripheriegerät (P1, P2, P3) außerdem einen Steckanschluß (C) an einer anderen Seite als der Seite mit dem zum Steckanschluß (11) des Endgeräts (T) komplementären Anschluß (11′) besitzt, um mehrere Peripheriegeräte in Kette zu verbinden.

## Claims

1. Multifunction videotex terminal which can be connected to a public switched telephone network line and to which an external device (P) can be connected, comprising a duplexer (20) for separating signals transmitted on said line, galvanic isolation means (30) for connecting said line and a bidirectional signal input/output of said duplexer, a modem (50) connected to a unidirectional signal input and to a unidirectional signal output of said duplexer, a microprocessor-based processing unit (40) connected to said modem and interfaced to a screen (42) and a keyboard (41), and an interface module (10) including a connector for connecting said peripheral device, in which terminal said connector (11) has a first pin for receiving digital data signals, a second pin for an earth connection, a third pin for sending digital data signals, a fourth pin for a "peripheral transmitting" signal and a fifth pin for a power supply output to the peripheral device, said terminal being characterised in that it further comprises three additional pins in said connector (11) of said interface module (10), respectively a sixth pin (6) for receiving an audio frequency signal from said line and connected to the unidirectional signal output (24) of said duplexer (20), a seventh pin for sending an audio frequency signal to said line and connected to the unidirectional signal input (23) of said duplexer (20) and an analogue earth eighth pin (8) connected to the analogue earth internal to the terminal (T).

2. Videotex terminal according to claim 1 characterised in that it further comprises a protective interface circuit (13) between said sixth and seventh pins (6, 7) of said connector (11) and said unidirectional output and input of said multiplexer (20) imposing extreme levels defined on the basis of the supply voltage levels of the duplexer on said unidirectional signal output (24) of the duplexer and extreme levels defined on the basis of said analogue earth on said unidirectional input (23) of the duplexer (20).

3. Videotex terminal according to claim 2 characterised in that said peripheral device is a voice synthesizer module (P1) including a mask-programmed voice synthesizer circuit (70) and a mask-programmed microcontroller (71) controlling it and equipped with a connector (11′) complementary to said connector (11) of the terminal for a power supply from the terminal T.

4. Videotex terminal according to claim 2 characterised in that said peripheral device is a telephone answering module (P2) including a telephone answering circuit (75) and a microcontroller (76) controlling it and equipped with a connector (11′) complementary to the connector (11) of the terminal for connecting it to the terminal and supplying it with power from the terminal.

5. Videotex terminal according to claim 2 characterised in that said peripheral is a modem module (P3) having a transmission speed higher than that of the modem (30) of the terminal (T) including a high-speed modem (80) and a microcontroller (81) controlling it and equipped with a connector (11′) complementary to the connector (11) of said terminal for connecting it to the terminal and for supplying it with power from the terminal (T), the high-speed modem (80) being functionally substituted for the internal modem (30) of the terminal (T) under the control of said microcontroller (81) to enable high-speed transmission of analogue data signals on said telephone line.

6. Videotex terminal according to any one of claims 3 to 5 characterised in that said peripheral device (P1, P2, P3) is further equipped with a connector (C) on a side other than that carrying the connector (11′) complementary to that (11) of the terminal (T) for daisychain connection of a plurality of peripheral devices.
